# EUROPEAN PATENT APPLICATION

(11) **EP 4 624 772 A1**
(43) Date of publication of application: **01.10.2025**
(21) Application number: 23894166.0
(22) Date of filing: 30.06.2023
(51) Int. Cl.: F16B 33/02, F16B 35/00, F16B 39/02

(54) **FASTENING TOOL**

(30) Priority: 24.11.2022 JP 2022186994
(71) Applicant: Pate.To Co., Ltd, Hamamatsu-shi, Shizuoka 431-0102 (JP)
(72) Inventor: UCHIDA Yonefusa, Hamamatsu-shi, Shizuoka 431-0102 (JP)
(74) Representative: Rau, Schneck & Hübner Patentanwälte Rechtsanwälte PartGmbB
(86) International application number: PCT/JP2023/024460
(87) International publication number: WO 2024/111150

(57) **Abstract**

The present invention relates to a fastening tool. The fastening tool of the present invention includes: a male screw-side member (10) having a screw portion (11), the screw portion (11) being formed by alternately arranging, in an outer peripheral direction, male screw surfaces (12A, 12B) where male screw-side screw threads (12) are formed and outer peripheral pieces (13A, 13B) where the male screw-side screw threads (12) are not formed; and a female screw-side member (20) having a screw hole (21), the screw hole (21) being formed by alternately arranging, in an inner peripheral direction, female screw surfaces (22A, 22B) where female screw-side screw threads (22) are formed and inner peripheral pieces (23A, 23B) where the female screw-side screw threads (22) are not formed, the screw hole (21) allowing the male screw surfaces (12A, 12B) and the female screw surfaces (22A, 22B) to be threadedly engaged with each other.

## Description

### Technical Field

### (Cross-Reference to Related Application)

This application claims the benefit of priority of Japanese Patent Application No. 2022-186994, filed on November 24, 2022, which is incorporated herein by reference in its entirety.

### (Technical Field)

The present invention relates to a fastening tool.

### Background Art

A fastening tool is for threadedly engaging and fastening a male screw and a female screw. For the fastening tool, the following patent literature 1 discloses, for example, a technology to prevent loosening of a male screw and a female screw after fastening.

### Citation List

### Patent Literature

PTL 1: Japanese Patent Application Laid-Open No. 2011-112204

### Summary of Invention

### Technical Problem

In the conventional fastening tool as disclosed the above-mentioned patent literature 1, screw threads of a male screw and screw threads of a female screw are threadedly engaged and fastened by rotating the screws relative to each other by an amount corresponding to their respective lengths. Therefore, when the screw threads are long, fastening takes time.

Accordingly, an object of the present invention is to provide a fastening tool capable of reducing the time taken for fastening.

### Solution to Problem

In order to solve the above-described problems, a fastening tool according to one aspect of the present invention includes: a male screw-side member having a screw portion, the screw portion being formed by alternately arranging, in an outer peripheral direction, a male screw surface where male screw-side screw threads are formed and an outer peripheral piece where the male screw-side screw threads are not formed; a female screw-side member having a screw hole, the screw hole being formed by alternately arranging, in an inner peripheral direction, a female screw surface where female screw-side screw threads are formed and an inner peripheral piece where the female screw-side screw threads are not formed, the screw hole allowing the male screw surface and the female screw surface to be threadedly engaged with each other; and a locking portion formed in the screw portion and the screw hole so as to lock the relative rotation between the screw portion and the screw hole in a thread engagement state between the male screw surface and the female screw surface, the locking portion including a protruding portion that is formed on either the male screw-side screw thread or the female screw-side screw thread, and a recessed portion that is formed on the male or female screw-side screw thread that the protruding portion is not formed, the protruding portion being fitted into the recessed portion in the thread engagement state.

In a second aspect of the present invention, the protruding portion and the recessed portion are formed on inclined surfaces of the screw threads.

In a third aspect of the present invention, the protruding portion has a flat end face on a rear end side of the screw portion or a flat end face on a deeper side of the screw hole, and the recessed portion has a flat end face on an opening side of the screw hole or a flat end face on a front end side of the screw portion, the flat end face of the recessed portion corresponding to the flat end face of the protruding portion.

In a fourth aspect of the present invention, the outer peripheral piece is longer than the male screw surface in the outer peripheral direction, and the inner peripheral piece is longer than the female screw surface in the inner peripheral direction.

In a fifth aspect of the present invention, the protruding portion has a convexly curved end face on a front end side of the screw portion or a convexly curved end face on an opening side of the screw hole, and the recessed portion has a concavely curved end face on a deeper side of the screw hole or a concavely curved end face on a rear end side of the screw portion, the concavely curved end face corresponding to the end face on the front end side of the screw portion or the end face on the opening side of the screw hole.

### Advantageous Effects of Invention

The fastening tool according to the present invention can reduce the time taken for fastening.

### Brief Description of Drawings

[Fig. 1] Fig. 1 is a sectional view in an axial direction of a fastening tool according to a first embodiment of the present invention.
[Fig. 2] Fig. 2 is a sectional view in a radial direction of a screw portion in a male screw-side member according to the first embodiment of the present invention.
[Fig. 3] Fig. 3 is a sectional view in a radial direction of a screw hole in a female screw-side member according to the first embodiment of the present invention.
[Fig. 4] Fig. 4 is a schematic perspective view describing an angle at the time of inserting the screw portion into the screw hole according to the first embodiment of the present invention.
[Fig. 5] Fig. 5 is a partially enlarged view of a screw thread in a male screw surface according to the first embodiment of the present invention.
[Fig. 6] Fig. 6 is a partially enlarged view of a screw thread in a female screw surface according to the first embodiment of the present invention.
[Fig. 7] Fig. 7 is an enlarged view showing a state where a protruding portion is fitted into a recessed portion according to the first embodiment of the present invention.
[Fig. 8] Fig. 8 is a partially enlarged view of a screw thread of a male screw surface according to a second embodiment of the present invention.
[Fig. 9] Fig. 9 is a partially enlarged view of a screw thread of a female screw surface according to the second embodiment of the present invention.
[Fig. 10] Fig. 10 is a sectional view in a radial direction, showing a thread engagement state of a male screw surface and a female screw surface according to a third embodiment of the present invention.
[Fig. 11] Fig. 11 is a sectional view of a fastening tool according to a fourth embodiment of the present invention. Description of Embodiments

Hereinafter, embodiments of the present invention will be described with reference to the accompanying drawings. In order to facilitate understanding of the description, the same components are denoted by the same reference numerals in the respective drawings as much as possible, and redundant descriptions will be appropriately omitted.

### == First embodiment ==

Hereinafter, a first embodiment of the present invention will be described.

### <<Configuration>>

First, the configuration of a fastening tool 1 according to the first embodiment of the present invention (hereinafter referred to as "the present embodiment") will be described.

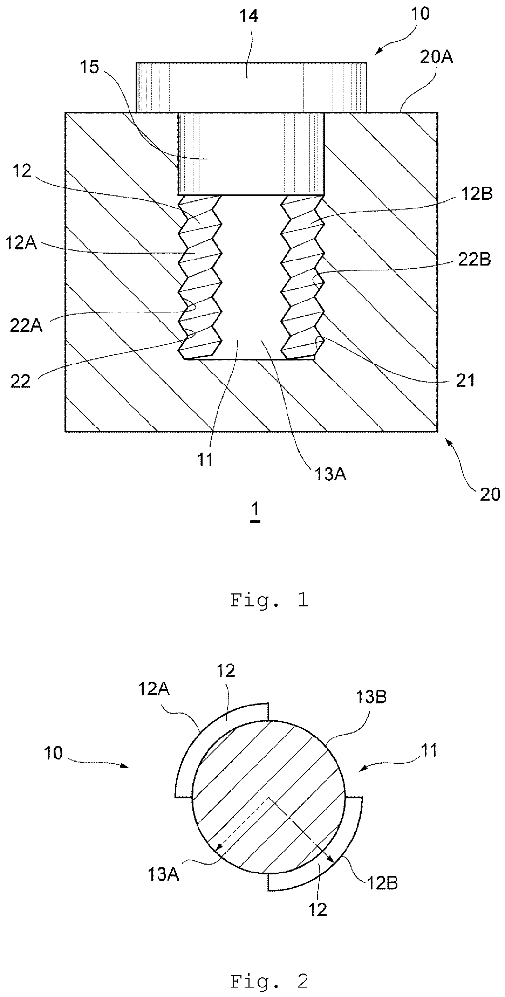

Fig. 1 is a sectional view in an axial direction of the fastening tool 1 according to the present embodiment. As shown in Fig. 1, the fastening tool 1 includes, as main parts, a male screw-side member 10 and a female screw-side member 20.

Of these, the male screw-side member 10 includes, as main portions, a screw portion 11, a head portion 14, and a tubular portion 15.

The screw portion 11 extends in an axial direction so that male screw surfaces 12A, 12B where male screw-side screw threads 12 are formed and outer peripheral pieces 13A, 13B where the screw threads 12 are not formed are alternately arranged in an outer peripheral direction.

Roughly speaking, the outer peripheral piece 13A and the outer peripheral piece 13B have shapes formed by cutting off part of an outer peripheral surface of a cylindrical shape in the peripheral direction.

Fig. 2 is a sectional view in a radial direction of the screw portion 11. Fig. 2 shows that the screw portion 11 is formed so that the male screw surface 12A, the outer peripheral piece 13A, the male screw surface 12B, and the outer peripheral piece 13B are arranged in this order in the peripheral direction.

As shown in Fig. 2, the outer diameter of the screw thread 12 (a dashed-dotted line arrow) is larger than the outer diameter of the outer peripheral piece 13A and the outer peripheral piece 13B (a dashed line arrow).

The head portion 14 is larger in diameter than the screw portion 11 and comes into contact with a surface 20A of the female screw-side member 20 directly or via a washer.

The tubular portion 15 is a tubular member that is formed coaxially with the screw portion 11 on the rear end side of the screw portion 11 and couples the screw portion 11 with the head portion 14. The tubular portion 15 is preferably cylindrical.

Meanwhile, the female screw-side member 20 includes a screw hole 21 as a main part.

The screw hole 21 extends in the axial direction so that female screw surfaces 22A, 22B where female screw-side screw threads 22 are formed and inner peripheral pieces 23A, 23B where the screw threads 22 are not formed are alternately arranged in an inner peripheral direction.

Roughly speaking, the inner peripheral piece 23A and the inner peripheral piece 23B have shapes formed by cutting off part of the inner peripheral surface of a cylindrical shape in the peripheral direction.

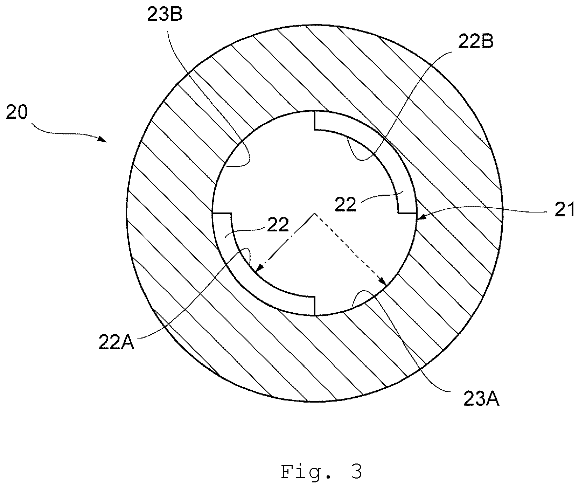

Fig. 3 is a sectional view in a radial direction of the screw hole 21. Fig. 3 shows that the screw hole 21 is formed so that the female screw surface 22A, the inner peripheral piece 23A, the female screw surface 22B, and the inner peripheral piece 23B are arranged in this order in the peripheral direction.

As shown in Fig. 3, in the screw hole 21, part of the screw thread 22 (a dashed-dotted line arrow) is smaller in hole diameter than the inner peripheral piece 23A and the inner peripheral piece 23B (a dashed line arrow).

Moreover, the female screw surface 22A and the female screw surface 22B are formed into a shape that is threadedly engageable with the male screw surface 12A and the male screw surface 12B, respectively.

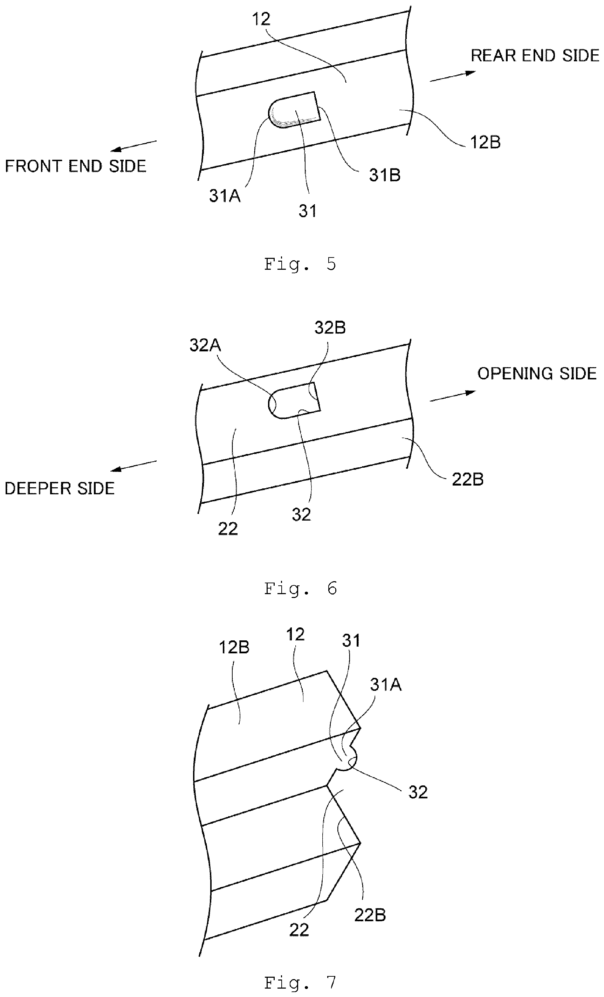

Fig. 5 is a partially enlarged view of the screw thread 12 of the male screw surface 12B. Fig. 6 is a partially enlarged view of the screw thread 22 of the female screw surface 22B. As shown in Figs. 5 and 6, the fastening tool 1 further includes a protruding portion 31 and a recessed portion 32.

As shown in Fig. 5, the protruding portion 31 is formed on the surface (inclined surface) of the screw thread 12 of the male screw surface 12B (or optionally of the male screw surface 12A). The protruding portion 31 has a convexly curved end face 31A on the front end side of the screw portion 11 (in an arrow direction indicated as "front end side" in Fig. 5) and also has a flat end face 31B on the rear end side of the screw portion 11 (in an arrow direction indicated as "rear end side" in Fig. 5).

Here, the end face 31A can also be described as an end face of the protruding portion 31 on the front side thereof in a direction of relative rotation of the screw portion 11 at the time of thread engagement between the male screw surfaces 12A, 12B and the female screw surfaces 22A, 22B. The end face 31B can also be described as an end face of the protruding portion 31 on the rear side thereof in the direction of relative rotation.

As shown in Fig. 6, the recessed portion 32 is formed on the surface (inclined surface) of the screw thread 22 of the female screw surface 22B (or optionally of the female screw surface 22A). The recessed portion 32 is configured so that the protruding portion 31 fits thereinto when the male screw surface 12B and the female screw surface 22B are in a thread engagement state. The recessed portion 32 further has a concavely curved end face 32A, which corresponds to the end face 31A, on the deeper side of the screw hole 21 (in an arrow direction indicated as "deeper side" in Fig. 6) and also has a flat end face 32B, which corresponds to the end face 31B, on an opening side of the screw hole 21 (in an arrow direction indicated as "opening side" in Fig. 6).

Here, the end face 32A can also be described as an end face of the recessed portion 32 on the front side thereof in the direction of relative rotation of the screw hole 21 at the time of thread engagement between the male screw surfaces 12A, 12B and the female screw surfaces 22A, 22B. The end face 32B can also be described as an end face of the recessed portion 32 on the rear side thereof in the direction of relative rotation.

In the outer peripheral direction of the screw portion 11, it is preferable that the outer peripheral piece 13A and the outer peripheral piece 13B be made longer than the male screw surface 12A and the male screw surface 12B, respectively. In the inner peripheral direction of the screw hole 21, it is preferable that the inner peripheral piece 23A and the inner peripheral piece 23B be made longer than the female screw surface 22A and the female screw surface 22B, respectively.

In particular, it is preferable that the outer peripheral piece 13A and the outer peripheral piece 13B have a length that is more than 1/2 and equal to or less than 2/3 of the entire perimeter in the outer peripheral direction of the screw portion 11. It is also preferable that the inner peripheral piece 23A and the inner peripheral piece 23B have a length that is more than 1/2 and equal to or less than 2/3 of the entire perimeter in the inner peripheral direction of the screw hole 21. By setting these lengths to more than 1/2, it becomes easy to insert the screw portion 11 into the screw hole 21. By setting these lengths to equal to or less than 2/3, it becomes possible to enhance the fastening power between the screw portion 11 and the screw hole 21.

More preferably, in the outer peripheral direction of the screw portion 11, the outer peripheral piece 13A and the outer peripheral piece 13B are made about 1% longer than the male screw surface 12A and the male screw surface 12B, respectively. In the inner peripheral direction of the screw hole 21, the inner peripheral piece 23A and the inner peripheral piece 23B are made about 1% longer than the female screw surface 22A and the female screw surface 22B, respectively.

The length of the screw portion 11 in the axial direction may be about 2.1 times the length of a conventional screw portion in its axial direction. The longer the screw portion 11 is in the axial direction, the more the fastening power between the male screw-side member 10 and the female screw-side member 20 is enhanced. Suppose a case where the male screw surface 12A and the outer peripheral piece 13A, the male screw surface 12B and the outer peripheral piece 13B, the female screw surface 22A and the inner peripheral piece 23A, and the female screw surface 22B and the inner peripheral piece 23B are each equal in length in the peripheral direction. In this case, when the length of the screw portion 11 in the axial direction is made twice the length of the conventional screw portion in the axial direction, the resulting fastening power thus becomes equivalent to that of a conventional fastening tool. However, in the case where the outer peripheral piece 13A and the outer peripheral piece 13B are made about 1% longer than the male screw surface 12A and the male screw surface 12B, and where the inner peripheral piece 23A and the inner peripheral piece 23B are made about 1% longer than the female screw surface 22A and female screw surface 22B, as described above, the fastening power becomes equivalent to that of the conventional fastening tool when the length in the axial direction is made about 2.1 times longer.

This concludes the description about the configuration of the fastening tool 1 according to the present embodiment.

### <<Operation>>

A description will now be given of the operation of the fastening tool 1 according to the present embodiment.

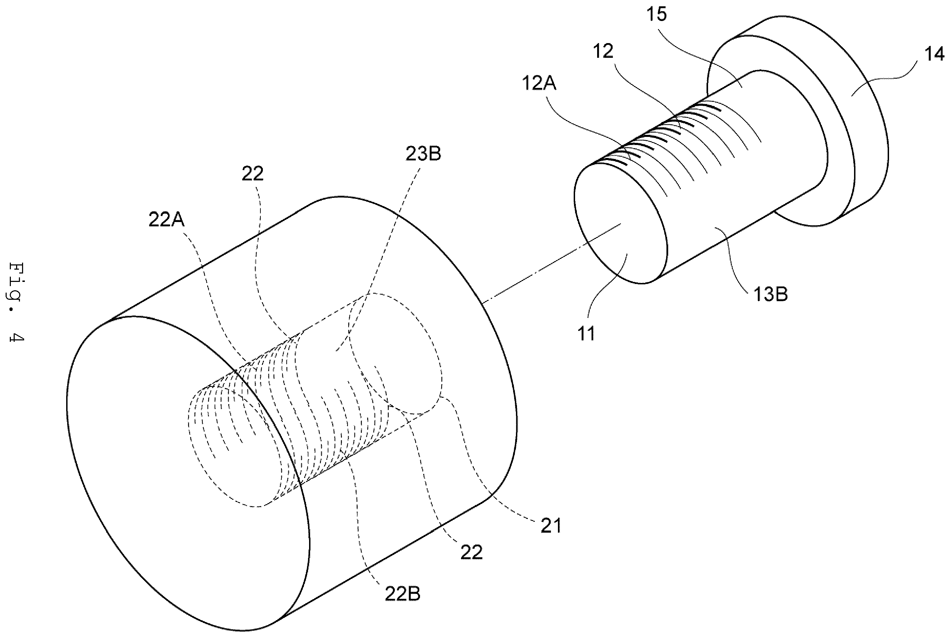

Fig. 4 is a schematic perspective view that illustrates the angle at the time of inserting the screw portion 11 into the screw hole 21. As shown in Fig. 4, the screw portion 11 is first inserted linearly into the screw hole 21 at an angle that causes the male screw surface 12A to face the inner peripheral piece 23B, causes the male screw surface 12B (not shown) to face the inner peripheral piece 23A (not shown), causes the outer peripheral piece 13A (not shown) to face the female screw surface 22A, and causes the outer peripheral piece 13B to face the female screw surface 22B.

In this state, the screw portion 11 and the screw hole 21 are rotated relative to each other so that the male screw surface 12A is threadedly engaged with the female screw surface 22A and the male screw surface 12B is threadedly engaged with the female screw surface 22B to bring the head portion 14 of the male screw-side member 10 into contact with the surface 20A of the female screw-side member 20. As a result, the screw portion 11 and the screw hole 21 are fastened to each other (see Fig. 1).

Fig. 7 is an enlarged view showing the state where the protruding portion 31 is fitted into the recessed portion 32. As shown in Fig. 7, since the protruding portion 31 and the recessed portion 32 fit to each other in a state where the male screw surface 12A and the male screw surface 12B are threadedly engaged with the female screw surface 22A and the female screw surface 22B, respectively, the relative rotation between the screw portion 11 and the screw hole 21 can be reliably locked.

In other words, the protruding portion 31 and the recessed portion 32 serve as a locking portion that locks the relative rotation between the screw portion 11 and the screw hole 21 in a state where the male screw surface 12A and the male screw surface 12B are threadedly engaged with the female screw surface 22A and the female screw surface 22B, respectively.

Here, when the screw portion 11 and the screw hole 21 are rotated relative to each other so that the male screw surface 12B is threadedly engaged with the female screw surface 22B, the protruding portion 31 fits into the recessed portion 32 from the side of the convexly curved end face 31A as shown in Fig. 7.

In the present embodiment, the locking portion (including the protruding portion 31 and the recessed portion 32) locks the relative rotation between the screw portion 11 and the screw hole 21, and therefore it is established even without providing the head portion 14.

### <<Advantageous Effects>>

The fastening tool 1 includes: the male screw-side member 10 having the screw portion 11, the screw portion 11 being formed by alternately arranging, in an outer peripheral direction, the male screw surfaces 12A, 12B where the male screw-side screw threads 12 are formed and the outer peripheral pieces 13A, 13B where the male screw-side screw threads 12 are not formed; and the female screw-side member 20 having the screw hole 21, the screw hole 21 being formed by alternately arranging, in an inner peripheral direction, the female screw surfaces 22A, 22B where the female screw-side screw threads 22 are formed and the inner peripheral pieces 23A, 23B where the female screw-side screw threads 22 are not formed, the screw hole 21 allowing the male screw surfaces 12A, 12B and the female screw surfaces 22A, 22B to be threadedly engaged with each other.

In contrast to the conventional screw portion in which the screw threads are continuous, the screw portion 11 includes the outer peripheral piece 13A and the outer peripheral piece 13B. Therefore, the screw threads 12 are short (provided that the length in the axial direction is the same as that of the conventional screw portion). Similarly, in contrast to the conventional screw hole where the screw threads are continuous, the screw hole 21 includes the inner peripheral piece 23A and the inner peripheral piece 23B. Therefore, the screw threads 22 are short (provided that the length in the axial direction is the same as that of the conventional screw hole).

Consequently, the conventional fastening tool needs to be rotated a plurality of times at the time of threadedly engaging the screw portion with the screw hole. In contrast, in the fastening tool 1 according to the present embodiment, the screw portion 11 and the screw hole 21 are rotated relative to each other after the screw portion 11 is inserted linearly into the screw hole 21, so that the screw portion 11 and the screw hole 21 can be threadedly engaged by less than one rotation. Furthermore, the time taken for fastening can be made shorter than in the past.

The fastening tool 1 according to the present embodiment further includes the locking portion formed in the screw portion 11 and the screw hole 21 so as to lock a relative rotation between the screw portion 11 and the screw hole 21 in the thread engagement state between the male screw surfaces 12A, 12B and the female screw surfaces 22A, 22B.

This structure can prevent the thread engagement state between the male screw surfaces 12A, 12B and the female screw surfaces 22A, 22B from loosening.

Moreover, in the present embodiment, the locking portion includes the protruding portion 31 that is formed on the male screw-side screw thread 12, and the recessed portion 32 that is formed on the female screw-side screw thread 22 with the protruding portion 31 being fitted into the recessed portion 32 in the thread engagement state.

Such a simple structure can thus prevent the thread engagement state between the male screw surfaces 12A, 12B and the female screw surfaces 22A, 22B from loosening.

Furthermore, in the present embodiment, the protruding portion 31 is formed on the inclined surface of the screw thread 12, and the recessed portion 32 is formed on the inclined surface of the screw thread 22.

This structure makes it possible to lock the screw portion 11 to the screw hole 21 and makes it easy to rotate the screw portion 11 and the screw hole 21 at the time of thread engagement as compared with the case where, for example, the protruding portion 31 is formed at the top of the screw thread 12.

Furthermore, in the present embodiment, the protruding portion 31 has the flat end face 31B in the screw thread 12 on the rear end side of the screw portion 11, and the recessed portion 32 has the flat end face 32B in the screw thread 22 on the opening side of the screw hole 21, with the flat end face 32B corresponding to the flat end face 31B of the protruding portion 31.

This structure makes it difficult for the protruding portion 31 to be separated from the recessed portion 32 when force is applied in a direction of separating the screw portion 11 from the screw hole 21.

Furthermore, in the present embodiment, the protruding portion 31 has the convexly curved end face 31A on the front end side of the screw portion 11, and the recessed portion 32 has the concavely curved end face 32A on the deeper side of the screw hole 21.

As a result, when the screw portion 11 and the screw hole 21 are rotated relative to each other so as to threadedly engage the male screw surface 12A and the male screw surface 12B with the female screw surface 22A and the female screw surface 22B, respectively, the protruding portion 31 fits into the recessed portion 32 from the side of the convexly curved end face 31A, which allows smooth fitting.

In the fastening tool 1 according to the present embodiment, the outer peripheral pieces 13A, 13B are longer than the male screw surfaces 12A, 12B in the peripheral direction and the inner peripheral pieces 23A, 23B are longer than the female screw surfaces 22A, 22B in the peripheral direction.

As described in the foregoing, in the case of inserting the screw portion 11 into the screw hole 21, the screw portion 11 is inserted into the screw hole 21 at an angle that causes the male screw surface 12A to face the inner peripheral piece 23B, causes the male screw surface 12B to face the inner peripheral piece 23A, causes the outer peripheral piece 13A to face the female screw surface 22A, and causes the outer peripheral piece 13B to face the female screw surface 22B. Therefore, when the outer peripheral pieces 13A, 13B are made longer than the male screw surfaces 12A, 12B in the peripheral direction, and the inner peripheral pieces 23A, 23B are made longer than the female screw surfaces 22A, 22B in the peripheral direction, it is possible to prevent the screw threads 12 on the male screw surfaces 12A, 12B from abutting the screw threads 22 on the female screw surfaces 22A, 22B even in the case where a slight angular deviation occurs during insertion, and therefore insertion can be carried out smoothly.

The male screw-side member 10 according to the present embodiment includes the male screw surfaces 12A, 12B that are arranged in part of the screw portion 11 in the outer peripheral direction and where the male screw-side screw threads 12 are formed, and the outer peripheral pieces 13A, 13B that are alternately arranged with the male screw surfaces 12A, 12B in the outer peripheral direction of the screw portion 11 to form the outer periphery of the screw portion 11, with the outer peripheral pieces 13A, 13B not having the male screw-side screw threads 12 formed thereon.

As compared with the conventional screw portion of the male screw where the screw threads are continuous, the screw portion 11 includes the outer peripheral piece 13A and the outer peripheral piece 13B. As a result, the screw threads 12 are short (provided that the axial length is the same as that of the conventional screw portion) and therefore the time taken for fastening can be made shorter than in the past.

The female screw-side member 20 according to the present embodiment includes the female screw surfaces 22A, 22B that are arranged in part of the screw hole 21 in the inner peripheral direction and where the female screw-side screw threads 22 are formed, and the inner peripheral pieces 23A, 23B that are alternately arranged with the female screw surfaces 22A, 22B in the inner peripheral direction to form the inner periphery of the screw hole 21, with the inner peripheral pieces 23A, 23B not having the female screw-side screw threads formed thereon.

As a result, as compared with the conventional screw hole of the female screw where the screw threads are continuous, the screw hole 21 includes the inner peripheral piece 23A and the inner peripheral piece 23B. As a result, the screw threads 22 are short (provided that the axial length is the same as that of the conventional screw portion) and therefore the time taken for fastening can be made shorter than in the past.

### == Second Embodiment ==

Hereinafter, a second embodiment of the present invention will be described.

### <<Configuration>>

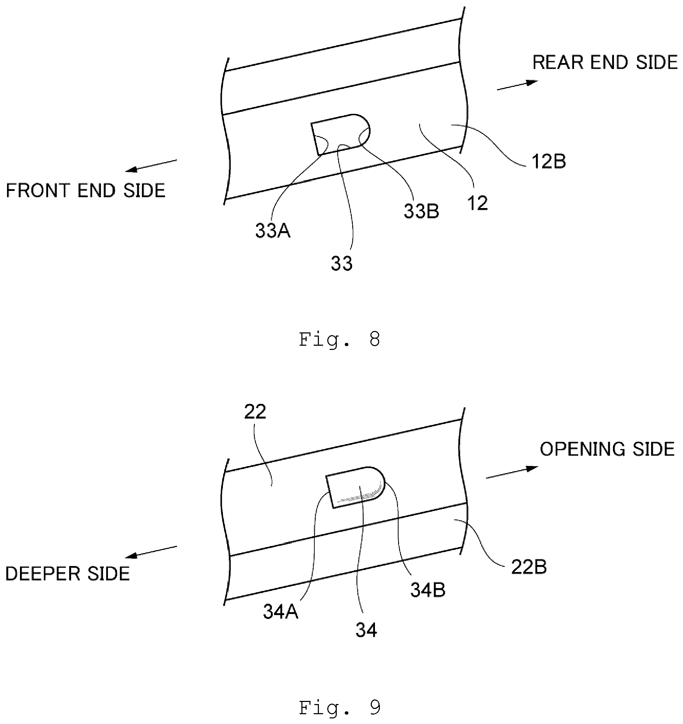

Fig. 8 is a partially enlarged view of the screw thread 12 of the male screw surface 12B. Fig. 9 is a partially enlarged view of the screw thread 22 of the female screw surface 22B.

In the second embodiment of the present invention (hereinafter, referred to as "the present embodiment"), in place of the protruding portion 31 and the recessed portion 32 in the first embodiment, a protruding portion 34 and a recessed portion 33 shown in Figs. 8 and 9 are provided.

As shown in Fig. 9, the protruding portion 34 is formed on the screw thread 22 of the female screw surface 22B (or optionally of the female screw surface 22A). The protruding portion 34 has a convexly curved end face 34B on the opening side of the screw hole 21 (in an arrow direction indicated as "opening side" in Fig. 9) and also has a flat end face 34A on the deeper side of the screw hole 21 (in an arrow direction indicated as "deeper side" in Fig. 9).

As shown in Fig. 8, the recessed portion 33 is formed on the screw thread 12 of the male screw surface 12B (or optionally of the male screw surface 12A). The recessed portion 33 is configured so that the protruding portion 34 fits thereinto in a thread engagement state. The recessed portion 33 further has a concavely curved end face 33B, which corresponds to the end face 34B, on the rear end side of the screw portion 11 (in an arrow direction indicated as "rear end side" in Fig. 8), and also has a flat end face 33A, which corresponds to the end face 34A, on the front end side of the screw portion 11 (in an arrow direction indicated as "front end side" in Fig. 8).

Since the protruding portion 34 and the recessed portion 33 fit to each other in a state where the male screw surface 12A and the male screw surface 12B are threadedly engaged with the female screw surface 22A and the female screw surface 22B, respectively, the relative rotation between the screw portion 11 and the screw hole 21 can be reliably locked in the same manner as in the first embodiment.

In other words, the protruding portion 34 and the recessed portion 33 serve as a locking portion that locks the relative rotation between the male screw-side member 10 and the female screw-side member 20 in a state where the male screw surface 12A and the male screw surface 12B are threadedly engaged with the female screw surface 22A and the female screw surface 22B, respectively.

Here, when the screw portion 11 and the screw hole 21 are rotated relative to each other so that the male screw surface 12B is threadedly engaged with the female screw surface 22B, the protruding portion 34 fits into the recessed portion 33 from the side of the convexly curved end face 34B.

Furthermore, in the present embodiment, the locking portion (including the protruding portion 34 and the recessed portion 33) locks the relative rotation between the screw portion 11 and the screw hole 21, and therefore it is established even without providing the head portion 14 (see the first embodiment).

### <<Advantageous Effects>>

In the present embodiment, the locking portion includes the protruding portion 34 that is formed on the female screw-side screw thread, and the recessed portion 33 that is formed on the male screw-side thread, with the protruding portion 34 being fitted into the recessed portion 33 in the thread engagement state.

Such a simple structure can thus prevent the thread engagement state between the male screw surface 12B and the female screw surface 22B from loosening.

Furthermore, since the recessed portion 33 and the protruding portion 34 are formed on the male screw-side screw thread 12 and on the female screw-side screw thread 22, respectively, the length where the protruding portion 34 in the present embodiment is in contact with the inclined surface of the screw thread 22 when the screw portion 11 and the screw hole 21 are rotated relative to each other is shorter than the length where the protruding portion 31 in the first embodiment is in contact with the surface of the screw thread 12. Therefore, the relative rotation between the screw portion 11 and the screw hole 21 can be made smoother than in the first embodiment.

Furthermore, in the present embodiment, the protruding portion 34 is formed on the inclined surface of the screw thread 22, and the recessed portion 33 is formed on the inclined surface of the screw thread 12.

This structure makes it possible to lock the screw portion 11 to the screw hole 21 and makes it easy to rotate the screw portion 11 and the screw hole 21 at the time of thread engagement as compared with the case where, for example, the protruding portion 31 is formed on the top of the screw thread 22.

Furthermore, in the present embodiment, the protruding portion 34 has the flat end face 34A in the screw thread 22 on the deeper side of the screw hole 21, and the recessed portion 33 has the flat end face 33A in the screw thread 12 on the front end side of the screw portion 11, with the flat end face 34A corresponding to the flat end face 34A of the protruding portion 34.

This structure makes it difficult for the protruding portion 34 to be separated from the recessed portion 33 when force is applied in the direction of separating the screw portion 11 from the screw hole 21.

Furthermore, in the present embodiment, the protruding portion 34 has the convexly curved end face 34B in the screw thread 22 on the opening side of the screw hole 21, and the recessed portion 33 has the concavely curved end face 33B in the screw thread 12 on the rear end side of the screw portion 11.

Accordingly, when the screw portion 11 and the screw hole 21 are rotated relative to each other, the protruding portion 34 fits into the recessed portion 33 from the side of the convexly curved end face 34B, which allows smooth fitting.

### == Third Embodiment ==

Hereinafter, a third embodiment of the present invention will be described.

### <<Configuration>>

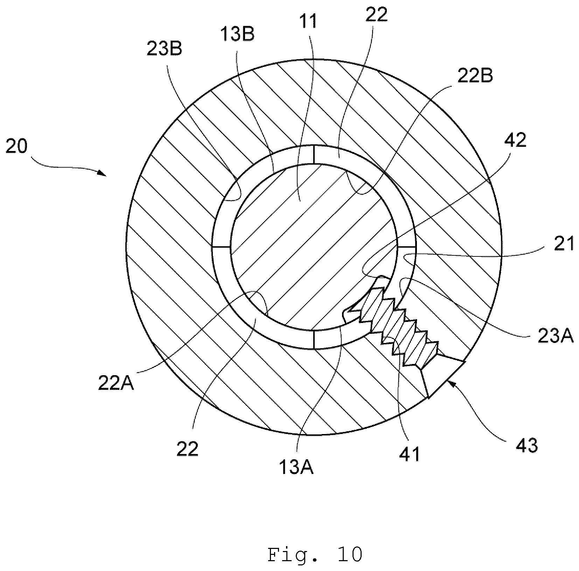

Fig. 10 is a sectional view in a radial direction, showing a thread engagement state of male screw surfaces 12A, 12B and female screw surfaces 22A, 22B according to a third embodiment of the present invention (hereinafter, referred to as "the present embodiment"). In Fig. 10, the screw threads 12 are hidden behind the screw threads 22, and so the screw threads 12 are not illustrated.

In the present embodiment, in addition to the configuration of the first embodiment (or the second embodiment), a small screw hole 41, a recess part 42, and a small male screw 43 are further provided.

The small screw hole 41 is a screw hole formed to penetrate the female screw-side member 20 from the inner peripheral piece 23A (or optionally from the inner peripheral piece 23B) to the outer side.

The recess part 42 is formed at a position of the outer peripheral piece 13A (or optionally of the outer peripheral piece 13B) facing the small screw hole 41 in the thread engagement state between the male screw surfaces 12A, 12B and the female screw surfaces 22A, 22B. In addition, the recess part 42 has a substantially elliptical shape that is expanded along the extending direction of the male screw-side screw thread 12. Preferably, the elliptical recess part 42 has an aspect ratio of about 1:3.

The small male screw 43 is a male screw to be inserted into the recess part 42 through the small screw hole 41 in a thread engagement state.

In a state where the screw portion 11 and the screw hole 21 are fastened to each other, insertion of the small male screw 43 into the recess part 42 via the small screw hole 41 can reliably lock the relative rotation between the screw portion 11 and the screw hole 21 as in the first embodiment and the second embodiment.

In other words, the small screw hole 41, the recess part 42, and the small male screw 43 serve as a locking portion that reliably locks the relative rotation between the screw portion 11 and the screw hole 21 in a state where the male screw surface 12A and the male screw surface 12B are threadedly engaged with the female screw surface 22A and the female screw surface 22B, respectively.

In the present embodiment, the relative rotation between the screw portion 11 and the screw hole 21 can be locked by the locking portion (including the small screw hole 41, the recess part 42, and the small male screw 43) without providing the head portion 14 (see the first embodiment).

### <<Advantageous Effects>>

In the present embodiment, the locking portion includes the small screw hole 41 which is a screw hole formed to penetrate the female screw-side member 20 from the inner peripheral piece 23A (or optionally from the inner peripheral piece 23B) to the outer side, the recess part 42 formed at a position of the outer peripheral piece 13A (or optionally of the outer peripheral piece 13B) facing the small screw hole 41 in the thread engagement state, and the small male screw 43 which is a male screw to be inserted into the recess part 42 through the small screw hole 41.

With this structure, insertion of the small male screw 43 into the recess part 42 via the small screw hole 41 reliably locks the relative rotation between the screw portion 11 and the screw hole 21. Such a simple structure can thus prevent the thread engagement state between the male screw surfaces 12A, 12B and the female screw surfaces 22A, 22B from loosening.

In addition, the recess part 42 and the small screw hole 41 are formed on the outer peripheral piece 13A and the inner peripheral piece 23A (or on the outer peripheral piece 13B and the inner peripheral piece 23B) on which the screw threads 12 and the screw threads 22 are not formed, respectively, so that it is easy to manufacture.

In addition, in the present embodiment, the recess part 42 has a shape that is expanded along the extending direction of the male screw-side screw thread.

If the center position of the recess part 42 is deviated from the small screw hole 41 when the male screw surface 12A and the male screw surfaces 12B are threadedly engaged with the female screw surface 22A and the female screw surface 22B, respectively, the direction that is deviated is the extending direction of the screw threads 12 and the screw threads 22. Therefore, the recess part 42 has a shape that is expanded along the extending direction of the screw threads 12 and the screw threads 22. As a result, even when this deviation occurs, the small male screw 43 can be inserted into the recess part 42 through the small screw hole 41.

### == Fourth Embodiment ==

Hereinafter, a fourth embodiment of the present invention will be described.

### <<Configuration>>

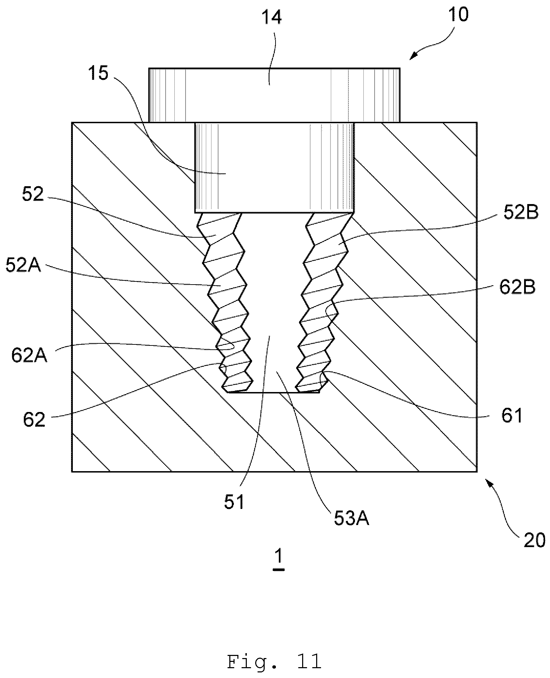

Fig. 11 is a sectional view in an axial direction of a fastening tool 2 according to the fourth embodiment of the present invention (hereinafter, referred to as "the present embodiment"). In the present embodiment, in place of the screw portion 11 and the screw hole 21 in the first embodiment, a screw portion 51 and a screw hole 61 are provided as shown in Fig. 11.

The screw portion 51 is formed in a manner where the widths of the male screw-side screw threads 52 formed on the male screw surface 52A and the male screw surface 52B gradually become narrower toward the front end of the screw portion 51. In addition, the outer diameter of the screw portion 51 including the male screw surface 52A, the male screw surface 52B, the outer peripheral piece 53A, and another outer peripheral piece (not shown) is formed so as to gradually become smaller toward the front end of the screw portion 51.

The screw hole 61 is formed so that the widths of the female screw-side screw threads 62 formed on the female screw surface 62A and the female screw surface 62B gradually become narrower toward the deeper side of the screw hole 61, narrowing by an amount corresponding to the male screw-side screw threads 52. In addition, the inner diameter of the screw hole 61 including the female screw surface 62A, the female screw surface 62B, and two inner peripheral pieces (not shown) is formed so as to gradually become smaller toward the deeper side of the screw hole 61, becoming smaller by an amount corresponding to the outer diameter of the screw portion 51.

### <<Operation>>

A description will now be given of the operation of the fastening tool 2 according to the present embodiment.

First, as in the first embodiment, the screw portion 51 is inserted into the screw hole 61 at an angle that causes each of the male screw surfaces to face each of the inner peripheral pieces, and causes each of the outer peripheral pieces to face each of the female screw surfaces.

Regarding the screw hole 61, the inner diameter on the opening side is larger than the inner diameter on the deeper side, this configuration makes it easier to insert the screw portion 51 into the screw hole 61.

In the inserted state as described above, the screw portion 51 and the screw hole 61 are rotated relative to each other so that the respective male screw surfaces and the respective female screw surfaces are threadedly engaged with each other, thereby fastening the screw portion 51 and the screw hole 61 to each other.

In doing so, since the respective widths of the screw threads 52 and the screw threads 62 gradually become narrower toward the front end side of the screw portion 51 and the deeper side of the screw hole 61, respectively, the fastening power due to the relative rotation is enhanced.

That is, the shapes of the screw portion 51 and the screw hole 61 themselves serve as a locking portion that locks the relative rotation between the screw portion 51 and the screw hole 61 in a state where the respective male screw surfaces and the respective female screw surfaces are threadedly engaged with each other.

### <<Advantageous Effects>>

In the present embodiment, the widths of the screw threads 52 in the male screw surface 52A and the male screw surface 52B are formed to gradually become narrower toward the front end of the screw portion 51, and the widths of the screw threads 62 in the female screw surface 62A and the female screw surface 62B are formed to gradually become narrower toward the deeper side of the screw hole 61, correspondingly to the screw threads 52.

Such a simple structure can thus prevent the thread engagement state between the screw portion 51 and the screw hole 61 from loosening.

### == Modification ==

The present invention is not limited to the above-described embodiments. That is, the above-described specific examples in which design changes have been appropriately made by a person skilled in the art are encompassed by the scope of the present invention as long as the features of the present invention are included. In addition, the respective elements included in the above-described embodiments and following modifications can be combined as long as the combinations are technically possible, and those obtained by the combinations thereof are also encompassed by the scope of the present invention as long as they include the features of the present invention.

For example, in each embodiment, the screw portion 11 (51) includes two male screw surfaces and two outer peripheral pieces, and the screw hole 21 (61) includes two female screw surfaces and two inner peripheral pieces. However, the present invention does not limit the number of these surfaces. That is, the configuration is acceptable as long as the screw portion 11 (51) includes one or more male screw surfaces and one or more outer peripheral pieces, and as long as the screw hole 21 (61) includes one or more female screw surfaces and one or more inner peripheral pieces. However, it is preferable that the numbers of the male screw surfaces, the outer peripheral pieces, the female screw surfaces, and the inner peripheral pieces be the same.

The angle of relative rotation between the screw portion 11 and the screw hole 21 necessary for threadedly engaging the male screw surfaces with the female screw surfaces varies depending on the number of the male screw surfaces and the female screw surfaces.

For example, in a case where the lengths of the male screw surface, the outer peripheral piece, the female screw surface, and the inner peripheral piece in the peripheral direction are the same, the angle of relative rotation is 180° when each of the unit counts of the male screw surface, the outer peripheral piece, the female screw surface, and the inner peripheral piece is one.

When each of the unit counts of the male screw surface, the outer peripheral piece, the female screw surface, and the inner peripheral piece is two, the angle of the relative rotation is 90°.

When each of the unit counts of the male screw surface, the outer peripheral piece, the female screw surface, and the inner peripheral piece is three, the angle of the relative rotation is 60°.

When each of the unit counts of the male screw surface, the outer peripheral piece, the female screw surface, and the inner peripheral piece is four, the angle of the relative rotation is 45°.

That is, as the number of each of the surfaces increases, the angle of the relative rotation between the screw portion 11 (51) and the screw hole 21 (61) decreases, so that the time required for fastening can be shortened.

Furthermore, regardless of each of the numbers of the surfaces, it is preferable that the outer peripheral piece be made longer than the male screw surface in the outer peripheral direction and also that the inner peripheral piece be made longer than the female screw surface in the inner peripheral direction. When they are formed in this manner, the angle of the relative rotation changes, naturally.

Alternatively, the outer peripheral piece may be made shorter than the male screw surface in the outer peripheral direction, and the inner peripheral piece may be made shorter than the female screw surface in the inner peripheral direction. This structure improves the fastening power between the screw portion 11 and the screw hole 21.

Furthermore, in the fourth embodiment, the widths of the screw threads 52 in the male screw surface 52A and the male screw surface 52B are formed to gradually become narrower toward the front end of the screw portion 51. However, the opposite configuration in which they are formed to gradually become narrower toward the rear end of the screw portion 51 may alternatively be used.

Similarly, in the fourth embodiment, the widths of the female screw-side screw threads 62 formed on the female screw surface 62A and the female screw surface 62B are formed to gradually become narrower toward the deeper side of the screw hole 61, narrowing by an amount corresponding to the screw threads 52. However, the opposite configuration in which they are formed to gradually become narrower toward the opening side of the screw hole 61 may alternatively be used. This structure enhances the fastening power between the screw portion 51 and the screw hole 61.

In addition, the respective shapes of the screw threads 12, the screw threads 22, the screw threads 52, and the screw threads 62 are not limited to those shown in Figs. 1 to 11 and can be changed to various shapes.

Figs. 1, 5 to 9, and 11 illustrate the states where the screw threads 12 (52) are formed in an oblique direction with respect to the axial direction of the screw portion 11 (51), and the screw threads 22 (62) are formed in an oblique direction with respect to the axial direction of the screw hole 21 (61).

However, the present invention is not limited thereto, and the screw threads 12 (52) may be formed so as to be orthogonal or substantially orthogonal to the axial direction of the screw portion 11 (51), and the screw threads 22 (62) may be formed so as to be orthogonal or substantially orthogonal to the axial direction of the screw hole 21 (61).

Note that "substantially orthogonal" means that the inclination angle from the state of being orthogonal falls within ±3°.

Although Fig. 1 and Fig. 11 illustrate the head portion 14 and the tubular portion 15, the tubular portion 15 may not be provided. In addition, as long as the locking portion described in each embodiment is provided, the head portion 14 may also not be provided.

That is, Figs. 1 and 11 illustrate examples in which the shape of the male screw-side member 10 has the shape of the male screw itself including the screw portion 11 (51), the head portion 14, and the tubular portion 15, and the female screw-side member 20 has the shape of the female screw itself.

However, the present invention is not limited thereto, and any configuration is acceptable as long as the male screw-side member 10 includes the screw portion 11 (51) having the locking portion, and as long as the female screw-side member 20 includes the screw hole 21 (61) having the locking portion.

In addition, the fastening tool 1 (2) can be used for those having a diameter of several cm to several tens of meters. As for the material, various materials such as metal, vinyl chloride, glass, and the like can be applied. Therefore, for example, the male screw-side member 10 may be applied to the mouth of PET bottles, and the female screw-side member 20 may be applied to the cap thereof. Alternatively, the present invention can also be applied to an opening portion of two pipes that are threadedly engaged with each other for connection, a stopper for bottles, or the like.

### Reference Signs List

1, 2: fastening tool
10: male screw-side member
11, 51: screw portion
12, 52: (male screw-side) screw thread
12A, 12B, 52A, 52B: male screw surface
13A, 13B: outer peripheral piece
20: female screw-side member
21, 61: screw hole
22, 62: (female screw-side) screw thread
22A, 22B: female screw surface
23A, 23B: inner peripheral piece
31, 34: protruding portion
31A, 31B, 32A, 32B, 33A, 33B, 34A, 34B: end face
32, 33: recessed portion
41: small screw hole
42: recess part
43: small male screw

## Claims

1. A fastening tool comprising:
a male screw-side member having a screw portion, the screw portion being formed by alternately arranging, in an outer peripheral direction, a male screw surface where male screw-side screw threads are formed and an outer peripheral piece where the male screw-side screw threads are not formed;
a female screw-side member having a screw hole, the screw hole being formed by alternately arranging, in an inner peripheral direction, a female screw surface where female screw-side screw threads are formed and an inner peripheral piece where the female screw-side screw threads are not formed, the screw hole allowing the male screw surface and the female screw surface to be threadedly engaged with each other; and
a locking portion formed in the screw portion and the screw hole so as to lock a relative rotation between the screw portion and the screw hole in a thread engagement state between the male screw surface and the female screw surface,
the locking portion including
a protruding portion that is formed on either the male screw-side screw thread or the female screw-side screw thread, and
a recessed portion that is formed on the male or female screw-side screw thread that the protruding portion is not formed, the protruding portion being fitted into the recessed portion in the thread engagement state.

2. The fastening tool according to claim **1,** wherein the protruding portion and the recessed portion are formed on inclined surfaces of the screw threads.

3. The fastening tool according to claim **1,** wherein:
the protruding portion has a flat end face on a rear end side of the screw portion or a flat end face on a deeper side of the screw hole; and
the recessed portion has a flat end face on an opening side of the screw hole or a flat end face on a front end side of the screw portion, the flat end face of the recessed portion corresponding to the flat end face of the protruding portion.

4. The fastening tool according to claim 2 or **3,** wherein
the outer peripheral piece is longer than the male screw surface in the outer peripheral direction, and the inner peripheral piece is longer than the female screw surface in the inner peripheral direction.

5. The fastening tool according to claim 2 or 3, wherein:
the protruding portion has a convexly curved end face on a front end side of the screw portion or a convexly curved end face on an opening side of the screw hole; and
the recessed portion has a concavely curved end face on a deeper side of the screw hole or a concavely curved end face on a rear end side of the screw portion, the concavely curved end face corresponding to the end face on the front end side of the screw portion or the end face on the opening side of the screw hole.
